# EUROPEAN PATENT APPLICATION

(11) **EP 4 286 211 A1**
(43) Date of publication of application: **06.12.2023**
(21) Application number: 23175279.1
(22) Date of filing: 25.05.2023
(51) Int. Cl.: B60L 53/63, B60L 53/67

(54) **AN ELECTRIC VEHICLE SUPPLY EQUIPMENT, A METHOD FOR CUSTOMIZING THE CHARGING PATTERN OF BATTERIES OF AN ELECTRIC VEHICLE SUPPLY EQUIPMENT AND A SYSTEM FOR CUSTOMIZING THE CHARGING PATTERN OF BATTERIES OF AN ELECTRIC VEHICLE SUPPLY EQUIPMENT**

(30) Priority: 31.05.2022 NO 20220628
(71) Applicant: Defa AS, 3540 Nesbyen (NO)
(72) Inventor: Klungseth, Bård, 3122 Tønsberg (NO); Freudrich, Sebastian, 1456 Nesoddtangen (NO); Kopperud, Agnar, 1383 Asker (NO)
(74) Representative: Zacco Norway AS

(57) **Abstract**

The disclosure relates to an electric vehicle supply equipment (10), EVSE for charging of batteries (8') in electrical vehicles, EVs 8, the EVSE (10) comprising: a charging unit (1) comprising: - a terminal block (2), - a display unit (3), and - a current load controller (4), wherein the display unit (4) comprising a selector (5) for defining an input to the current load controller (4) for defining a customized current load on one or more EVs 8. The disclosure further relates to a method for customizing the charging pattern of an electric vehicle supply equipment (10) and a system for customizing the charging pattern of an electric vehicle supply equipment (10).

## Description

### Technical field

The present disclosure relates to an electric vehicle supply equipment, a method for customizing the charging pattern of an electric vehicle supply equipment and a system for customizing the charging pattern of an electric vehicle supply equipment. More specifically, the disclosure relates to an electric vehicle supply equipment for electrical vehicle charging load management when charging of batteries in electrical vehicles, a method for customizing the charging pattern of an electric vehicle supply equipment and a system for customizing the charging pattern of an electric vehicle supply equipment as defined in the introductory parts of the independent claims.

### Background art

A problem with the solutions of the prior art electrical vehicles charging load management is that Electric Vehicle Supply Equipment, EVSE comprising customized charging patterns are only offered through complex and often not user accessible options. Another problem is how to offer a simple, secure, and flexible sharing option for multiple users/vehicles, and specifically when some of the vehicles needs priority over other vehicles.

This leads to hesitance to sharing power resources such as access to power lines from same overcurrent protective device, fuse of circuit breaker. There is thus a need for improved feature in EVSEs that simplifies sharing of power resources in an adequate manner.

### Summary

It is an object of the present disclosure to mitigate, alleviate or eliminate one or more of the above-identified deficiencies and disadvantages in the prior art and solve at least the above mentioned problem. According to a first aspect there is provided an electric vehicle supply equipment, EVSE, for charging batteries of electrical vehicles, EVs, the EVSE comprising: a charging unit comprising:
- a terminal block,
- a display unit, and
- a current load controller,
wherein the display unit comprising a selector for defining an input to the current load controller for defining a customized current load on one or more EVs.

The current load controller may be configurable, and is set up to control the current flow and any necessary communication with a connected EV. The Current load controller may also communicate charging schemes with other EVSEs in the event further EVSEs are defined to be in the same group of EVSEs as the present EVSE.

Providing a selector that is easily and securely accessible and able to customize the power distribution of current from the EVSEs will greatly simplify the use of the EVSE.

According to some embodiments, the EVSE comprises: a charging network, wherein the charging unit further comprising a communication module for communicating a current load of the charging unit of own and/or other EVSEs in the charging network.

When operating several EVSEs in a group of EVSEs, either on same line or multiple lines within same main power supply, it will greatly improve the flexibility if the individual EVSE is able to synchronize its offered current load to the connected EV. This is facilitated in present disclosure by that the individual EVSE may comprise a communication module.

According to some embodiments, the selector is one of a:
- pressure sensitive switch,
- position switch, and
- graphical switch on a touch sensitive display.

A selector that is operable directly on the user interface towards a user is thereby provided, and a direct correspondence between selector status and charging mode may be provided in an easy and safe manner.

According to some embodiments, the selector defines the current load of any EVSE in a predefined group of EVSEs corresponding to the selector input.

The latter feature enables any EVSE to be the "master" EVSE, and thus priority may dynamically be defined in real time.

According to some embodiments, the group of EVSEs is limited to a single EVSE, and the selector input defines the current load of the single EVSE corresponding to the selector input.

When only one EVSE is in play it is possible to provide a local one or two user/EV current distribution pattern.

According to some embodiments, the EVSE further comprises: a selector timer which defines the time of charging according to selected current load when selector has been activated.

One alternative way to use the timer is to enable a time based charging pattern for a connected EV.

According to some embodiments, the selector timer is implemented as a feature in the current load controller.

According to some embodiments, the selector input provides an input to the current load controller toggling current load of selected EVSE in sequence between:
- a first reduced current,
- a second further reduced current, and
- the highest preconfigured current limit.

According to some embodiments, the selector input provides an input to the current load controller toggling in sequence between:
- a current reduction of 5-25% from highest preconfigured current limit,
- a current reduction of 25-75% from highest preconfigured current limit, and
- the highest preconfigured current limit.

According to some embodiments, any EVSE is enabled to utilize:
- a 1-phase connection to a power grid, and/or
- a 3-pase connection to the power grid,
and the current load controller in any of the EVSEs are provided with a predefined current load distribution matrix wherein the selector input of any of the EVSEs defines the current load for connected EVSEs according to the distribution matrix.

There is thus provided an environment wherein many EVSEs may utilize any of 1-, and 3-phase supplies, independent of network types; e.g.: TT, TN or IT.

According to some embodiments the selector input may define one or more of:
- share available current evenly on all connected EVSEs,
- charge in series, an EV connected to present EVSE first, and other connected EVs to same source, 1-phase/3-phase, starts charging session when batteries of present EV is fully charged or charged to a predefined % of fully charged battery, or charged until a chosen/predefined timer timeout,
- charge in series, an EV connected to other EVSEs first, and present EV connected to same source, 1-phase/3-phase, when other EV is fully or at predefined level charged, and
- share available current at a predefined priority level on all connected EVSEs.

According to some embodiments, the EVSE comprises: a remote computing resource, the remote computing resource being connected to the charging network via a communication medium, the communication medium being one of a:
- WAN-,
- LAN-,
- Wi-Fi-, or
- Cloud based- communication system, and/or
- The Internet,
wherein the communication between the EVSE and the remote computing resource being wired, or wireless, or a combination of the two.

According to a second aspect there is provided a method for customizing the charging pattern of an electric vehicle supply equipment, EVSE, the method comprising the steps:
- providing one or more EVSEs according to the first aspect, for charging of batteries of one or more Electrical Vehicles, EVs, and
- selecting charging patter for any of the EVs by operating the selector in accordance with a current load distribution matrix.

According to some method embodiments, the selected charging pattern is one of:
- charging at a first reduced current,
- charging at a second further reduced current,
- charging at the highest preconfigured current limit,
- share available current evenly on all connected EVSEs,
- charge in series, the batteries of an EV connected to present EVSE first, and other connected EVs to same source, 1-phase/3-phase, when present EV is fully or at predefined level charged,
- charge in series, an EV connected to other EVSEs first, and present EV connected to same source, 1-phase/3-phase, when other EV is fully or at predefined level charged, and
- share available current at a predefined priority level on all connected EVSEs.

According to a third aspect there is provided a system for customizing the charging pattern of an electric vehicle supply equipment, EVSE, when charging batteries if an electrical vehicle, EV, the system comprising:
- one or more EVSEs according to the first aspect, and
- a power grid for supplying power to the EVSEs.

According to some system embodiments, the power grid supply is able to supply power in 1-, and/or 3-phase, and the system further the system comprises:
- a remote computing resource,
- a communication medium, and
- a charging network, wherein the remote computing resource being connected to the charging network via a communication medium, the communication medium being one of a:
   - WAN-,
   - LAN-,
   - Wi-Fi-, or
   - Cloud based- communication system,
      and/or
   - The Internet,
   wherein the communication between the EVSE and the remote computing resource being wired, or wireless, or a combination of the two.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Definitions:

Terminology -- The term "power grid", "charging network", and "circuit" is used in the meaning of describing a current/power source. It should be understood that when using these phrases it should also encompass current/power being sourced by other power providing equipment, such as off grid electrical resources such as a solar power system, windmill system, or other known to the skilled person.

### Brief descriptions of the drawings

The above objects, as well as additional objects, features and advantages of the present disclosure, will be more fully appreciated by reference to the following illustrative and nonlimiting detailed description of example embodiments of the present disclosure, when taken in conjunction with the accompanying drawings.
Figure 1 shows an embodiment of a complete EVSE assembly with cable and EV contact according to one embodiment of present disclosure
Figure 2A shows the front of the EVSE module in figure 1
Figure 2B shows an exploded view of the EVSE module in figure 1
Figure 3 is a flow diagram for a charging process of a standalone EVSE
Figure 4A show charger power connected indicator messages according to one embodiment of present disclosure
Figure 4B show charger status indicator messages according to one embodiment of present disclosure
Figure 4C show charger state indicator messages according to one embodiment of present disclosure
Figure 4D show charger connection indicator messages according to one embodiment of present disclosure
Figure 5 is a conceptual system overview of a multiple connected EVSEs according to one embodiment of present disclosure
Figure 6 is a flow diagram for a charging process comprising multiple EVSEs according to one embodiment of present disclosure
Figure 7 is a charging matrix according to embodiments of present disclosure

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

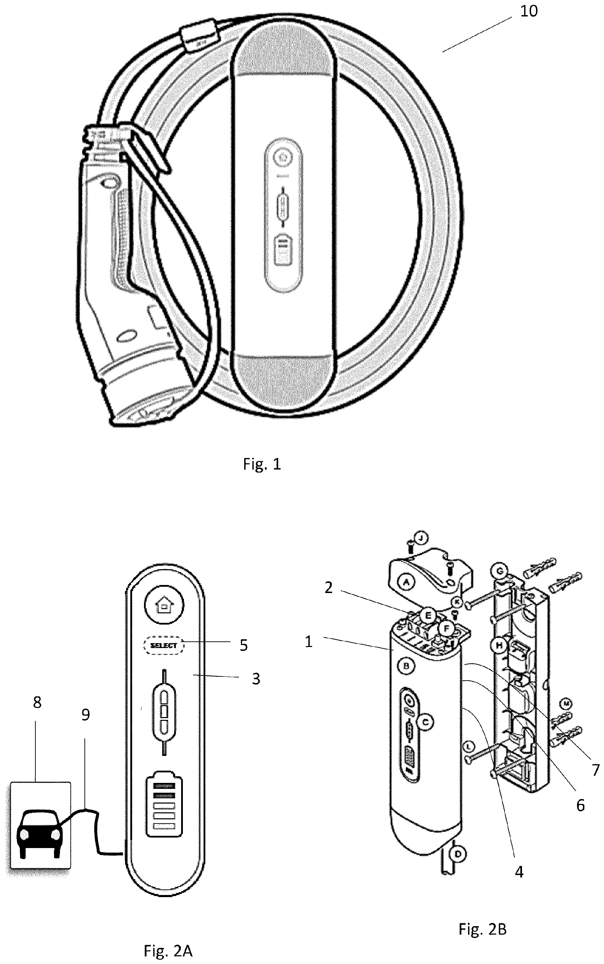

Figure 1 shows a complete EVSE assembly with cable and EV 8 contact according to one embodiment of present disclosure, typically comprising a charging unit (the EVSE), a charging cable, a cable clip, a plug cap, a vehicle plug, and a wall bracket. It shall be understood that the EVSE unit may comprise additional or fewer elements without deviating from the inventive concept according to present disclosure.

It should further be understood that the features described in present embodiment EVSE may easily be modified and implemented in other embodiments and products related current supply equipment for cars and other electrical vehicles and equipment comprising rechargeable batteries. This could be for example, but not limited to: ferries, boats, ships, lorries, busses, drones, air planes, fork lifts and truck loaders, and other.

The first aspect of this disclosure shows an electric vehicle supply equipment 10, EVSE for charging of batteries 8' in electrical vehicles, EVs 8, the EVSE 10 comprising:
a charging unit 1 comprising:
- a terminal block 2,
- a display unit 3, and
- a current load controller 4, wherein the display unit 4 comprising a selector 5 for defining an input to the current load controller 4 for defining a customized current load on one or more EVs 8.

The current load controller may be re-configurable, and may upon receiving selector 5 input from present EVSE, or from any other EVSEs being defined as in the same group of EVSEs.

The display unit displayed in figure 1 and figure 2A showing one embodiment of an EVSE according to present disclosure comprise a power Input indicator, a select button, a charger status indicator and a vehicle connection indicator. It shall be understood that the display unit may comprise additional or fewer elements without deviating from the inventive concept according to present disclosure.

In a further embodiment of an ESVE it may be provided for more than one charging cable, cable clip, plug cap, and vehicle plug to be connected to the same ESVE for serving two or more vehicles from the same ESVE.

The selector 5 provides an easily and securely accessible means for customizing the power distribution of current from the EVSE 10, and constitutes a greatly simplified user interface for controlling the EVSE.

The selector 5 may be implemented as one of, but not excluding other implementations:
- a pressure sensitive switch,
- a position switch, and
- a graphical switch on a touch sensitive display.

In the figures and present disclosure, the selector 5 and its operation is described as a pressure sensitive switch, but the operation of, and implementation may alter as indicated above. A position switch would for example not be pushed, but moved, and a touch display icon may comprise other dynamic operation feature. A skilled person may implement the selector in other variations without deviating from the inventive concept of present disclosure.

When being installed, the EVSE maximum current rating for the charging station may be set by the technician installing the unit.

The selector 5 input provides an input to the current load controller 4 of the EVSE 10. The selector may be implemented to toggle alternatives of the requested current load in a predefined sequence. When EVSE is operated by connecting an EV 8 batteries 8' without using the selector 5, a preset load current, typically the maximum current rating, will be automatically be selected. When the selector 5 is operated it may provide 2 or more alternative current load profiles. In present example there is provided 3 different current load profiles, and thus the selector 5 must be pushed once to select first alternative current load different from the preset maximum current load, twice for second alternative current load, and three times for returning to maximum current load. Successive pushing the selector 5 may rotate between the three alternative current load options.

In one example embodiment the sequence may be selecting between:
- a first reduced current,
- a second further reduced current, and
- the highest preconfigured current limit (maximum current rating).

In a more specific example of the current load alternatives supported by the selector 5 the input to the current load controller 4 may toggling current load of selected EVSE in sequence between:
- a current reduction of 5-25% from highest preconfigured current limit,
- a current reduction of 25-75% from highest preconfigured current limit, and
- the highest preconfigured current limit.

**Table 1: toggle sequence alternatives**

| | Product rating configured by installer | | | | | | | |
|---|---|---|---|---|---|---|---|---|
| maximum current | 4,6 kW | 4,1 kW | 3,7 kW | 3,5 kW | 3,0 kW | 2,3 kW | 1,8 kW | 1,4 kW |
| | 20 A | 18 A | 16 A | 15 A | 13 A | 10 A | 8 A | 6 A |
| Low 1 | 16 A | 15 A | 13 A | 12,5 A | 11 A | 9 A | 7 A | N/A |
| Low 2 | 8 A | 8 A | 8 A | 8 A | 8 A | 8 A | 6 A | N/A |

Table 1 illustrates one alternative toggle matrix for various EVSE setups for a setup where one EVSE is operating as a standalone EVSE connected to a power grid, and the selector 5 input defines the current load of the single EVSE 10 corresponding to the selector input.

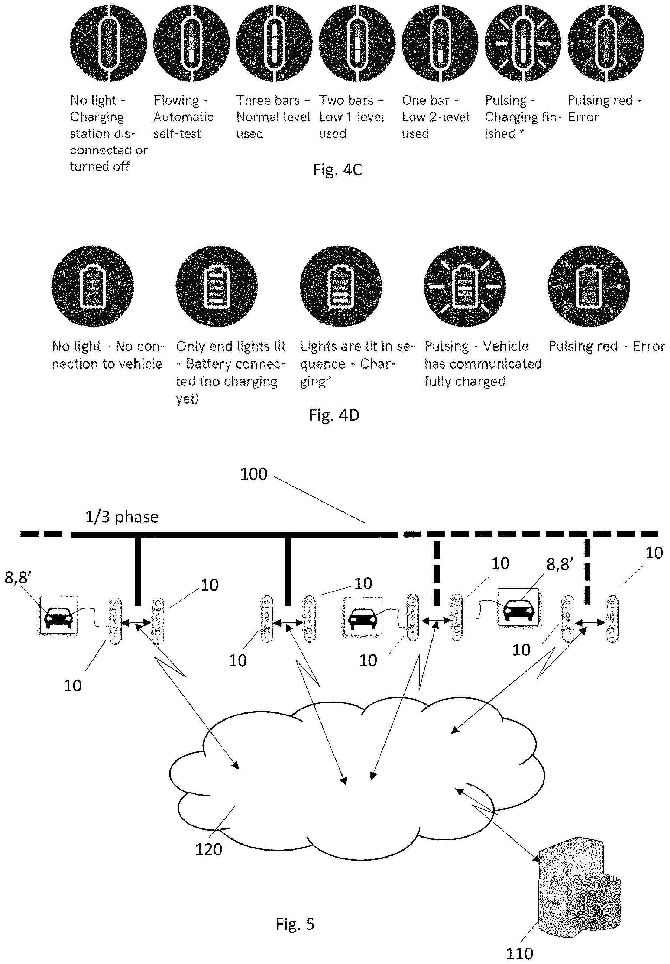

In a further embodiment the EVSE may be one of a group of two or more EVSEs connected in a charging network 100, exemplified, but not limited to, as shown in figure 5. The charging unit 1 may comprise a communication module 6 for communicating a current load of the charging unit of own and/or other EVSEs 10 in the charging network 100.

The communication module 6 is connected with the current load controller 4, and data related to the utilization of the power resources supplying current to the EVSE may be communicated to and from other EVSEs connected in the same group to shared power resources. Thus, the sharing of limited power resources may be facilitated. The current load controller 4 may receive instructions to limit the current load at any time during a charging session from any other connected EVSE. The operation of the selector 5 in any of the EVSEs in the defined group of EVSEs may initiate a communication from the corresponding EVSE, the communication comprising a new charging scheme for some or all of the connected EVSEs.

When connected to a remote computing resource, the charging scheme may optionally be controlled by management system residing in the remote computing resource and changed and communicated to any or all EVSEs in the group.

The communication module ay utilize any of wired and wireless communication medium for communicating between EVSEs and/or the remote computing resource, using any known standard or custom communication protocol for the purpose.

The selector 5 may define the current load of any EVSE 10 in a predefined group of EVSEs by a selecting current load corresponding to a selector input, and/or according to a preset priority map or charging matrix.

For example If 2 chargers are installed on 1 circuit, they can utilize the power which in a result should be lower than the max limit for the circuit. This is depending on the installation itself and would be within a range of minimum current load for the EVSE and (maximum current load for line - minimum current load for the EVSE), of example within the range 6 to 20A.

It would be practical for households with 2 chargers connected that they could be connected to the same circuit. This will mean less cabling, and extreme easy installation for the second charger.

When both connected to vehicle.
- The vehicles could be chosen to charge in sequence
- The vehicles could be chosen to charge in parallel (if available power is sufficient to do so.)

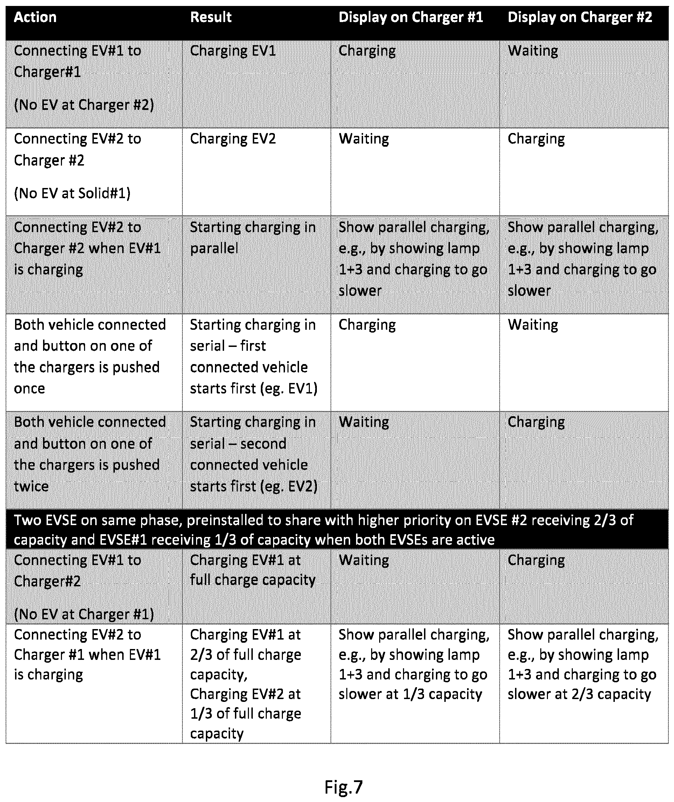

The end user may alternate, as shown in upper section of figure 7, between sequential and parallel by pushing the selector 5, and in a simple implementation the selector may alter the priority of the charging sequence between the two EVSE communication and being connected to the same power grid circuit.

A further possible embodiment is to provide a priority sharing between two or more EVSEs on same power grid circuit, exemplified in the lower section of figure 7, wherein the example comprise 2 EVSEs on the same circuit. In this example the second EVSE #2 is prioritized with receiving at least 2/3 of the available current and EVSE #1 being setup to receive at least 1/3 of the available current. So if the maximum current load on that circuit is 30A, the EVSE #2 may always receive at least 20A, also when an EV is connected for charging on EVSE #1. In this case any EV connected to any of the two EVSEs will receive up to 30A if no EV is attached for charging at the other EVSE, but if two EVs are connected and charging, EVSE#2 receives 20A, whilst EVSE #1 only receives 10A.

The priority share configuration may comprise more EVs and more EVSEs, and the priority sharing may be combined with the use of selector 5 to alter the priority, for example if there was a conflict in the setup of the priority sharing scheme. For example if in a larger group of EVSEs, several high priority EVSEs where simultaneously requesting priority share of the available current, a charger operating the selector 5 when initiating a charging session could influence the sharing scheme.

The example given in present disclosure shows a selection sequence of 3 alternatives when operating the selector 5, but it is within the inventive concept of present disclosure to comprise more alternatives. In fact the number of alternative charging schemes controlled by the operation of the selector is unlimited, and can be programmed to include a multiple of EVSEs, sharing the same current resources.

In order to make the installation of EVSEs for EVs more efficient, and to make the best possible use of electrical infrastructure, it may be advantageous to set up more chargers connected to a single electrical circuit. This can be from 2 and more as seen in figure 5.

If an installation is made in this way, the EVSEs operation may be optimized by providing a communication interphase for communication between the EVSEs, so that the total current draw on each available circuit does not exceed the size of the fuse / the maximum load that the circuit can support. The communication line between the EVSEs may be wireless or wired, the latter either based on a separate communication cable, or by using the power cable.

Such a group of EVSEs may then be set up to work in different load configurations depending on how the installation is performed and in the manner the selector on any EVSE is operated during a charging session of any connected EVs.

It is conceivable that EVSEs in a group draw power on different phases, where, for example, the connected cable is a three-phase cable, while the EVSE provides for the EV to only draw current from one phase. If 3 EVSEs is used it may be possible to optimize current load by connecting each ECVSE to 3 different phases, and each of the EVSEs may provide up to maximum current draw on one phase.

In an alternative setup the EVSEs share available power by dividing (which provides better utilization) the available current between the connected EVs. This may mean that all connected EVs receive an equal share, or that the share is skewed based on a preprogrammed rate. If there is not enough available charging current to start charging on another EV (there is a lower limit on when the EV should start charging) then the next EV that is connected automatically is prioritized later in the charging queue. The next EV starts charging when one of the other EVs is fully charged, or disconnected from the charging group.

A further alternative way to share the available power is to automatically queue all EVs one after the other. This means that in such groups, one EV is being charged, and that the other connected EVs are queuing up and waiting their turn to charge.

The queue can be handled based on different principles:
- The charging queue is allocated based on the EVSE that is connected (e.g. connected EVSEs have a preset priority)
- The charging queue is allocated after the time the EVSE was connected
- The charging queue is allocated on the basis of registration of which EV is parked where (requires the user to identify himself or otherwise register the EV)

Such a charging queue is often desirable if there is a special need for certain EVs to be charged first (company cars or other priority EVs), and for other EVs to have to wait and use any excess capacity when this exists.

In an even further advantageous embodiment of present disclosure it is provided a charging pattern switching between different types of load balances based on an in-situ real time selector 5 operation.

In smaller installations (e.g. in homes with 2-3 EVSEs) it may be necessary to switch between different load balancing types. For example: it may be normal for all EVSEs to be set up to share available power. In special cases, however, there may be a need to change from one load balancing to another, e.g. if one of the EVs is going on a longer drive the next day - and you want to make sure that this is fully charged before charging the other EVs.

With available prior art technology, one has to enter a programming device (e.g. a programming app on a Smartphone). If, however, it was provided a physical button on the EVSE, enabling the user to scroll between the settings / type of load balances, it would be possible for the user to easily choose the right setting to cover the charging needs for the next charging sequence.

In a first example this could be illustrated as:
- If the above group of EVSEs were 1 phase EVSEs then all electrical load would be on this single phase. When the first EV, EV #1, was connected (e.g. on EVSE # 2) this would have all available charging capacity (e.g. 20A). When EV # 2 was connected to EVSE # 3, the system was by default set to divide the current - ie 10A on each.
- Owner of EV # 2 knows that the EV will be used a lot the following day, and that it is important that this is fully charged. At the touch of a button on the EVSE itself (charger # 3), the setup changes to fully charge EVSE # 3 and queue EV # 1 / EVSE # 2. When EV # 2 is fully charged, or disconnected, EV # 1 / EVSE # 2 will charge at full capacity.

The button function on EVSE # 3 will then, for example, result in a sequence:
- Share available power (at all charging points used)
- Charging in series (this charging station first)
- Charging in series (the other charging station used first)
- Share available power (at all charging points used)

In a second example this could be illustrated as:
- If a group of EVSEs contained 2 EVSEs and where both were 1 phase EVSEs then all electrical load would be on this phase. In addition, the EVSEs were installed so that EVSE # 1 always received 2/3 of the available charging power when both EVs were connected and current was to be shared. When the first EV was connected (e.g. on EVSE # 2) this would have all available charging capacity (e.g. 18A). When EV # 2 was connected to EVSE # 1, the system was by default set to divide the current - e.g. 12A on EV # 2 and 6A on EV # 1.
- Owner of EV # 2 knows that the EV should not be used much the following day, and that it is more important that EV # 1 is fully charged. With 2 push on selector 5 on the EVSE itself (EVSE # 1), the setup is changed to fully charge on EVSE # 2 and put EV # 2 / EVSE # 1 in line. When EV # 1 (which is now charging with 18A) is fully charged, or disconnected, EV # 2 / EVSE # 1 will charge at full capacity (18A).

The button function on EVSE # 1 will then, for example, result in a sequence:
- Divide available current (on both used EVSEs by 2/3 and 1/3)
- Charging in series (this EVSE first)
- Charging in series (the second EVSE first)
- Divide available current (on both used EVSEs by 2/3 and 1/3)

It is of course a disadvantage that "everyone can choose between different variants of load sharing", and this will probably be difficult to make work except in cases where connected EVs belong to the same household. It may be provided a timers for defining a charge pattern in the time domain, or even use a timer for setting a time lock on the functionality, so that it is not possible to make such selections beyond 1 minute after an EV is connected. (To prevent unauthorized persons from touching the display)

Thus, the EVSE may comprise a selector timer 7 which defines the time of charging according to selected current load when selector 5 has been activated. This may be utilized as a feature for charging at a reduced load for an initial predefined time slot, and then change to a higher load. A typical embodiment of this would be to make sure the highest current load was executed at a later time slot (e.g. night time when power tends to be cheaper).

In one embodiment of present disclosure the selector timer 7 is implemented as a feature in the current load controller 4.

The EVSE 10 is enabled to utilize a network comprising one or more :
- 1-phase connection to a power grid, and/or
- 3-pase connection to the power grid, and
the current load controller 4 in any of the EVSEs 10 may be provided with a predefined current load distribution matrix wherein the selector 5 input of any of the EVSEs defines the current load for connected EVSEs according to the distribution matrix.

The EVSE is connected to the power grid via the terminal block 2.

Thus a predefined setup, as exemplified in present disclosure or in any other combinational setups may be selected according to a priority scheme defined by any of the first or the last operated selector 5 on any of the EVSEs in a group of EVSEs configured to relate their operation between themselves. Typically, the last operated selector 5 get highest priority on selected charging pattern.

The selector 5 input may define one or more of:
- share available current evenly on all connected EVSEs10,
- charge in series, an EV 8 connected to present EVSE 10 first, and other connected EVs to same source, 1-phase/3-phase, starts charging session when batteries 8' of present EV 8 is fully charged or charged to a predefined % of fully charged batteries 8',or charged until a chosen/predefined timer 7 timeout,
- charge in series, an EV 8 connected to other EVSEs 10 first, and present EV 8 connected to same source, 1-phase/3-phase, when other EV 8 is fully or at predefined level charged, and
- share available current at a predefined priority level on all connected EVSEs10.

The EVSE may further comprises: a remote computing resource 110, the remote computing resource 110 being connected to the charging network 100 via a communication medium, the communication medium being one of a:
- WAN-,
- LAN-,
- Wi-Fi-, or
- Cloud based- communication system 120, and/or
- The Internet, wherein the communication between the EVSE 10 and the remote computing resource being wired, or wireless, or a combination of the two.

The second aspect of this disclosure shows a method for customizing the charging pattern of an electric vehicle supply equipment the first aspect, EVSE, the method comprising the steps:
- providing one or more EVSEs according to the first aspect, for charging of batteries 8' of one or more Electrical Vehicles, EVs 8,
- selecting charging patter for any of the EVs by operating the selector 5 in accordance with a current load distribution matrix.

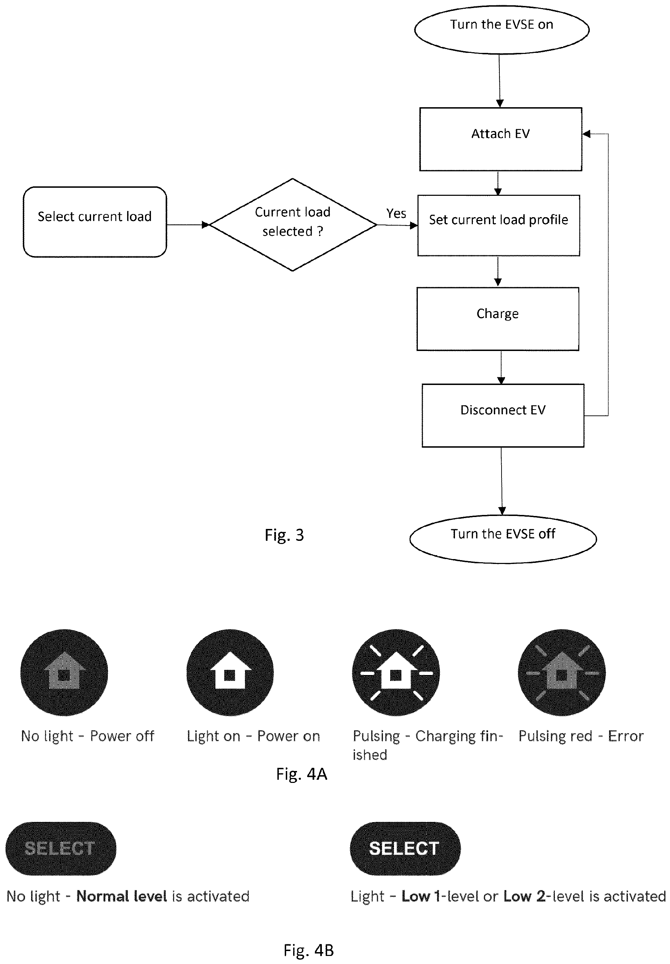

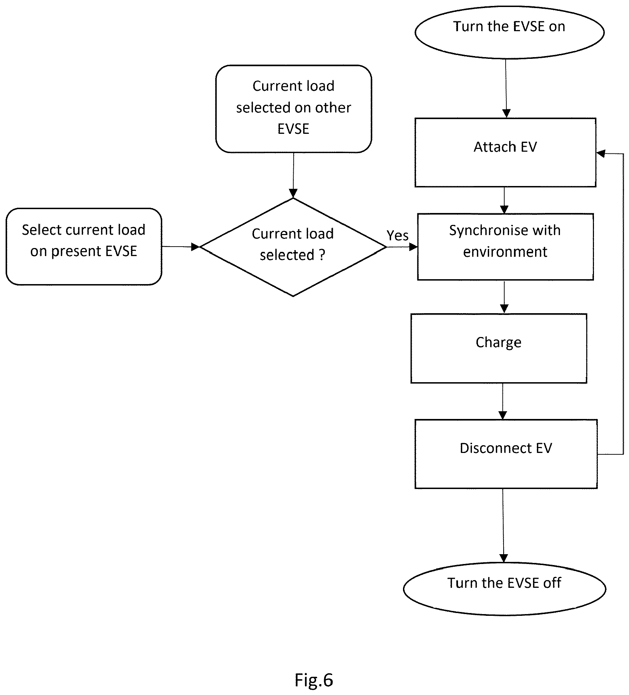

Figure 3 and figure 6 illustrates the sequence of operating a system according to present disclosure when a single EVSE is included, or a multiple EVSE are connected in a group sharing power resources respectively.

In the case of a single EVSE the use sequence is exemplified in one alternative in figure 3. The operating sequence may start with a user turning the VSE on, if it is not already turned on from previous charging session. The EV may be attached with the charging cable, and the current load is initially chosen to the default load current. The user may operate the select button to change the preferred load current as discussed in present disclosure.

The charge session starts and keeps charging until the session timer changes/ends the charging session or the battery of the EV is fully charged, upon which the user disconnects the EV, and the EVSE is ready for a new charging session.

In the event the single EVSE has two cables connected, and the ability to charge two cars simultaneously, in sequence, the selector may be used to select the preferred share sequence in accordance with a predefined share matrix as discussed in present disclosure.

In the event there are several EVSE organized in a group of EVSEs as exemplified in figure 5 and figure 6, the selector may be used to select current load of one or more of the EVSEs in the group of EVSEs. The priority of which EVSE have priority over the next or other EVSE may be pre-defined upon setup, but may also be un-prioritized in that any last EVSE operating the selector of own EVSE upon initiating a charging session have the highest priority on selecting the distribution of load current amongst the EVSEs in the group. The latter may result in that the current load on any EVSE may change during charging session as a result of another EVSE is redefining the distribution by having the selector 5 being operated upon a charging session being initiated there.

One embodiment of the power Input Indicator is exemplified in figure 4A. When the EVSE is connected to the power grid, via the terminal block 2, this indicator will show a steady white light when EVSE is turned on and power is connected. If the charging cycle has completed, or the battery 8' of connected EV 8 is full, the symbol will blink a white light, and a blinking red light signals that an error has been detected.

So when EVSE is turned on, and an EV 8 is attached a current load is default chosen, normally the maximum current load available for the EVSE. If user operates the selector a different current load maybe selected. As indicated i figure 4B, if no selection is performed the select button is in one embodiment unlit, dark. The Select button may be briefly pressed to toggle between Normal/Low 1/Low 2. The levels will appear in the following order: Normal (default starting level) → Low 1 → Low 2 → Normal →. When Select is pressed:
- The light on the button will be lit for 5 seconds and then fade.
- Charger Status Indication will blink for 2 seconds, then stay lit.

The Charger Status Indication is exemplified in figure 4C, and indicates the charging station setting. The display may blink for a few seconds at start-up and then settle on the current charging level for the device. No light in this symbol identifies that the EVSE is disconnected or turned off. A flowing light indicates that the automatic self-test is running.

One two and three bars lighted identifies what level of the preset charging current alternatives is chosen by the selector 5, or 3 bars, Normal level, as the default level if no selector 5 operation has been made.

A pulsing light at the bar level chosen indicates that the charging session is ended and/or battery of connected EV is fully charged.

A pulsing red light indicates an error has been detected.

Vehicle Connection Indication, as exemplified in figure 4D, indicates that the charging station is connected to the vehicle and that charging is in progress. One embodiment of this indicator is if no light is lit, there is no connection to the EV.

One lit bar in the symbol may illustrate that battery is connected, but a charging session has not been started yet.

When bars are lit in sequence this may indicate that the EVSE is active and a battery of a connected EV is being charged. A pulsing light may communicate that the battery of the connected EV is fully charged.

A pulsing red light indicates an error has been detected

The selected charging pattern may be one of:
- charging at a first reduced current,
- charging at a second further reduced current,
- charging at the highest preconfigured current limit
- share available current evenly on all connected EVSEs10,
- charge in series, the batteries 8' of an EV 8 connected to present EVSE 10 first, and other connected EVs to same source, 1-phase/3-phase, when present EV 8 is fully or at predefined level charged,
- charge in series, an EV 8 connected to other EVSEs 10 first, and present EV 8 connected to same source, 1-phase/3-phase, when other EV 8 is fully or at predefined level charged, and
- share available current at a predefined priority level on all connected EVSEs10.

The third aspect of this disclosure shows a system, as for example outlined in figure 5, for customizing the charging pattern of an electric vehicle supply equipment, EVSE, when charging batteries 8' of an electrical vehicle, EV 8, the system comprising:
- one or more EVSEs according to the first aspect,
- a power grid for supplying power to the EVSEs.

The system may comprise remote management services 110 providing one or more of, member service, user profiles, key escrow, security services, monitoring and payment services.

The power grid supply provided may be able to supply power in 1-, and/or 3-phase, and the system further the system comprises:
- a remote computing resource 110,
- a communication medium, and
- a charging network 100, wherein the remote computing resource 110 being connected to the charging network 100 via a communication medium,
the communication medium being one of a:
- WAN-,
- LAN-,
- Wi-Fi-, or
- Cloud based- communication system 120, and/or
- The Internet, wherein the communication between the EVSE 10 and the remote computing resource being wired, or wireless, or a combination of the two.

The person skilled in the art realizes that the present disclosure is not limited to the preferred embodiments described above. The person skilled in the art further realizes that modifications and variations are possible within the scope of the appended claims.

Additionally, variations to the disclosed embodiments can be understood and effected by the skilled person in practicing the claimed disclosure, from a study of the drawings, the disclosure, and the appended claims.

## Claims

1. An electric vehicle supply equipment (10), EVSE, for charging of batteries (8') in electrical vehicles, EVs (8), the EVSE (10) comprising:
a charging unit (1) comprising:
- a terminal block (2),
- a display unit (3), and
- a current load controller (4),
the EVSE (10) being **characterized by** :
the display unit (3) comprising a selector (5) for defining an input to the current load controller (4) for defining a customized current load on one or more EVs.

2. The EVSE (10) according to claim 1, further comprising:
a charging network (100), wherein
the charging unit (1) further comprising a communication module (6) for communicating a current load of the charging unit of own and/or other EVSEs (10) in the charging network (100).

3. The EVSE (10) according to claim 1 or 2, wherein
the selector (5) is one of a:
- pressure sensitive switch,
- position switch, and
- graphical switch on a touch sensitive display.

4. The EVSE (10) according to any one of previous claims, wherein
the selector (5) defines the current load of any EVSE (10) in a predefined group of EVSEs corresponding to the selector input.

5. The EVSE (10) according to any one of previous claims, wherein
the group of EVSEs (10) is limited to a single EVSE (10), and the selector (5) input defines the current load of the single EVSE (10) corresponding to the selector input.

6. The EVSE (10) according to claim 5, wherein the EVSE further comprising:
a selector timer (7) which defines the time of charging according to selected current load when selector (5) has been activated.

7. The EVSE (10) according to claim 6, wherein
the selector timer (7) is implemented as a feature in the current load controller (4).

8. The EVSE (10) according to any one of claim 5 to 7, wherein
the selector (5) input provides an input to the current load controller (4) toggling current load of selected EVSE in sequence between:
- a first reduced current,
- a second further reduced current, and
- the highest preconfigured current limit.

9. The EVSE (10) according to any one of claim 5 to 8, wherein
the selector (5) input provides an input to the current load controller (4) toggling current load of selected EVSE in sequence between:
- a current reduction of 5-25% from highest preconfigured current limit,
- a current reduction of 25-75% from highest preconfigured current limit, and
- the highest preconfigured current limit.

10. The EVSE (10) according to any one of previous claims 2 to 9, wherein
any EVSE (10) is enabled to utilize:
- a 1-phase connection to a power grid, and/or
- a 3-phase connection to the power grid,
and
the current load controller (4) in any of the EVSEs (10) are provided with a predefined current load distribution matrix wherein the selector (5) input of any of the EVSEs defines the current load for connected EVSEs according to the distribution matrix.

11. The EVSE (10) according to any one of previous claims 2 to 10, wherein
the selector (5) input may define one or more of:
- share available current evenly on all connected EVSEs(10),
- charge in series, an EV (8) connected (9) to present EVSE (10) first, and other connected EVs (8) to same source, 1-phase/3-phase, starts charging session when batteries of present EV (8) is fully charged or charged to a predefined % of fully charged battery (8'), or charged until a chosen/predefined timer (7) timeout,
- charge in series, an EV (8) connected to other EVSEs (10) first, and present EV (8) connected to same source, 1-phase/3-phase, when other EV (8) is fully or at predefined level charged, and
- share available current at a predefined priority level on all connected EVSEs(10).

12. The EVSE (10) according claim 10, further comprising:
a remote computing resource (110), the remote computing resource (110) being connected to the charging network (100) via a communication medium, the communication medium being one of a:
- WAN-,
- LAN-, or
- Cloud based- communication system (120), and/or
- The Internet, wherein
the communication between the EVSE (10) and the remote computing resource being wired, or wireless, or a combination of the two.

13. A method for customizing the charging pattern of an electric vehicle supply equipment (10), EVSE, the method being **characterized by** comprising the steps:
- providing one or more EVSEs according to any one of claim 1 to 12, for charging of batteries (8') of one or more Electrical Vehicles, EVs (8), and
- selecting charging patter for any of the EVs by operating the selector (5) in accordance with a current load distribution matrix.

14. The method according to claim 13, wherein the selected charging pattern is one of:
- charging at a first reduced current,
- charging at a second further reduced current,
- charging at the highest preconfigured current limit,
- sharing available current evenly on all connected EVSEs(10),
- charging in series, the batteries (8') of an EV (8) connected to present EVSE (10) first, and other connected EVs (8) to same source, 1-phase/3-phase, when present EV (8) is fully or at predefined level charged,
- charging in series, an EV (8) connected to other EVSEs (10) first, and present EV (8) connected to same source, 1-phase/3-phase, when other EV (8) is fully or at predefined level charged, and
- sharing available current at a predefined priority level on all connected EVSEs(10).

15. A system for customizing the charging pattern of an electric vehicle supply equipment (10), EVSE, when charging batteries of an electrical vehicle, EV, the system being **characterized by** comprising:
- one or more EVSEs according to any one of claim 1 to 12, and
- a power grid for supplying power to the EVSEs.

16. The system according to claim 15, wherein
the power grid supply is able to supply power in 1-, and/or 3-phase, and the system further comprising:
- a remote computing resource (110),
- a communication medium, and
- a charging network (100), wherein
the remote computing resource (110) being connected to the charging network (100) via a communication medium,
the communication medium being one of a:
- WAN-,
- LAN-, or
- Cloud based- communication system (120), and/or
- The Internet, wherein
the communication between the EVSE (10) and the remote computing resource being wired, or wireless, or a combination of the two.
